# EUROPÄISCHE PATENTSCHRIFT

(11) **EP 1 298 826 B1**
(45) Veröffentlichungstag und Bekanntmachung des Hinweises auf die Patenterteilung: **07.03.2007**
(21) Anmeldenummer: 02102339.5
(22) Anmeldetag: 10.09.2002
(51) Int. Cl.: H04J 14/06, H04B 10/135

(54) **Verfahren zur Übertragung von mindestens einem ersten und zweiten Datensignal im Polarisationsmultiplex in einem optischen Übertragungssystem**
Method of transmission of at least a first and a second polarisation multiplexed data signals in an optical communication system
Procédé de transmission d'au moins un premier et un second signaux de données multiplexés en polarisation dans un réseau de communication optique

(30) Priorität: 28.09.2001 DE 10147892
(43) Veröffentlichungstag der Anmeldung: 02.04.2003
(73) Patentinhaber: SIEMENS AKTIENGESELLSCHAFT, 80333 München (DE)
(72) Erfinder: Glingener, Christoph, Dr., 83620, Feldkirchen-Westerham (DE)

(56) Entgegenhaltungen:
- WO-A-01/19009
- WO-A-01/65754
- DE-A1- 10 017 516
- DE-A1- 10 019 932
- HEISMANN F ET AL: "AUTOMATIC POLARIZATION DEMULTIPLEXER FOR POLARIZATION-MULTIPLEXED TRANSMISSION SYSTEMS" PROCEEDINGS OF THE EUROPEAN CONFERENCE ON OPTICAL COMMUNICATION (ECOC) MONTREUX, SEPT. 12 - 16, 1993. REGULAR PAPERS, ZURICH, SEV, CH, Bd. VOL. 2 CONF. 19, 12. September 1993 (1993-09-12), Seiten 401-404, XP000492247
- ONO T ET AL: "KEY TECHNOLOGIES FOR TERABIT/SECOND WDM SYSTEMS WITH HIGH SPECTRAL EFFICIENCY OF OVER 1 BIT/S/HZ" IEEE JOURNAL OF QUANTUM ELECTRONICS, IEEE SERVICE CENTER, PISCATAWAY, NJ, US, Bd. 34, Nr. 11, November 1998 (1998-11), Seiten 2080-2088, XP000799002 ISSN: 0018-9197
- HILL P M ET AL: "OPTICAL POLARIZATION DIVISION MULTIPLEXING AT 8 GB/S WITH NOVEL CLOCK AND CARRIER RECOVERY" PROCEEDINGS OF THE EUROPEAN CONFERENCE ON OPTICAL COMMUNICATION (ECOC)REGULAR PAPERS. BERLIN, SEPT. 27 - OCT. 1, 1992. BOUND AS ONE WITH VOLUMES 2 & 3, FRANKFURT, IGVDE, DE, Bd. VOL. 1 CONF. 18, 27. September 1992 (1992-09-27), Seiten 165-168, XP000628129 ISBN: 3-8007-1896-0

## Beschreibung

Die Erfindung betrifft ein Verfahren zur Übertragung von mindestens einem ersten und zweiten Datensignal im Polarisationsmultiplex in einem optischen Übertragungssystem, dass eine Sendeanordnung und eine Empfangsanordnung aufweist, die über mindestens einen optischen Faserstreckenabschnitt miteinander verbunden sind.

Bei optischen Übertragungssystemen wird eine Erweiterung der Übertragungskapazität von bereits bestehenden optischen Übertragungssystemen dadurch ermöglich, daß die optischen Datensignale im Polarisationsmultiplex übertragen werden. Zur Übertragung von optischen Datensignalen im Polarisationsmultiplex werden jeweils zwei Trägersignale in mindestens einer Sendeanordnung mit derselben Wellenlänge erzeugt, die mit jeweils mit einem Datensignal moduliert werden. Das erste und zweite modulierte Signal weisen hierbei eine zueinander orthogonale Polarisation auf. Die zueinander orthogonal polarisierten modulierten Signale werden zu einem optischen Polaristionsmultiplexsignal zusammengefasst. Das optische Polaristionsmultiplexsignal wird in die optische Übertragungsfaser eingekoppelt und über die optische Übertragungsstrecke zu einer Empfangseinheit übertragen. Empfangsseitig werden die beiden orthogonal polarisierten modulierten Signale wellenlängenabhängig und polarisationsabhängig aus dem Polaristionsmultiplexsignal rückgewonnen.

Die Rückgewinnung der beiden orthogonal polarisierten modulierten Signale aus dem Polaristionsmultiplexsignal stellt hierbei eines der wesentlichen Probleme bei der Übertragung von optischen Datensignalen im Polarisationsmultiplex dar.

Hierzu ist es erforderlich aus dem übertragenen optischen Polaristionsmultiplexsignal ein Regelkriterium zur Regelung eines empfangsseitig angeordneten Polarisationstransformators zu ermitteln. Mit Hilfe des anhand des geeigneten Regelkriteriums geregelten Polarisationstransformators und beispielsweise eines nachfolgenden Polarisationssplitters oder eines Polarisationsfilters werden die zueinander orthogonal polarisiert übertragenen modulierten Signale getrennt.

Für die Regelung der empfangsseitigen Trennung der beiden orthogonal polarisierten Signale sind unterschiedliche Regelkriterien bekannt. Aus der Veröffentlichung "Optical polarisation division multiplexing at 4GB/S", von Paul M. Hill et al., IEEE Photonics Technology Letters, Vol. 4, No. 5, Mai 1992 ist die Verwendung von kohärenten Techniken in Kombination mit Pilottönen zur Rekonstruktion bzw. Trennung der polarisationsgemultiplexten optischen Signale bekannt. Ferner ist aus der Veröffentlichung "Fast Automatic Polarization Control System", Heismann and Whalen, IEEE Photonics Technology Letters, Vol. 4, No. 5, Mai 1992 eine Trennung der polarisationsgemultiplexten optischen Datensignale anhand eines aus dem wiedergewonnenen Takt sowie den empfangenen optischen Signalen erzeugten Korrelationssignals bekannt.

Darüber hinaus ist aus der internationalen Anmeldung WO 01/65754 A1 ein Verfahren zur empfangsseitigen Trennung der beiden orthogonal polarisiert übertragenen Signale anhand der Auswertung der Autokorrelationsfunktion eines der übertragenen Signale bekannt. Hierbei wird die Regelung des empfangsseitigen Polarisationsstellgliedes mit Hilfe des über den Autokorrelationsbetrag berechneten Extinktionsverhältnisses des jeweiligen übertragenen Signal ermittelt.

Aus der Patentdruckschrift WO 01/19009 ist des Weiteren eine Anordnung für eine optische Informationsübertragung bekannt, bei der die auftretende Interferenzen zwischen zumindest zwei optischen Teilsignalen in einem Signalverarbeitungsmodul detektiert werden und diese zur Steuerung eines polarisierenden Elementes ausgewertet werden. Über zwei optischen Sender TX1 und TX2 werden zwei optischen Teilsignale OSI, OS2 unterschiedlicher Frequenz erzeugt, weiche jeweils mit sendeseitigen Modulationssignalen moduliert werden. Anschließend werden diese zu einem Polarisationsmultiplexsignal zusammengefasst und an einen Empfanger übertragen. Das übertragene Polarisationsmultiplexsignal wird empfangsseitig mittels eines polarisierenden Elementes in zwei Signale aufgespalten, welche als detektierte Signale ED1, ED2 bezeichnet werden und welche aus einem breitbandigen Datensignal und einem niederfreguenten Signal bestehen. Über Filter LED1, LED2 wird bevorzugt das spektrale Maximum der zwischen den ersten und zweiten optischen Teilsignalen OS1, OS2 entstehenden Interferenzen INT1, INT2 in den detektierten Signalen ED1, ED2 ausgefiltert. Somit ist aus der genannten Druckschrift ein Verfahren bekannt, bei dem zwischen optischen Teilsignalen auftretende im niederfrequenten Bereich angesiedelte Interferenzen zur Steuerung eines polarisierenden Elementes ausgewertet werden.

Die Aufgabe der Erfindung ist darin zu sehen, ein neuartiges Verfahren bzw. eine neuartiges optisches Übertragungssystem für die Übertragung von hochbitratigen optischen Signalen im Polarisationsmultiplex anzugeben.

Die Aufgabe wird ausgehend von einem Verfahren gemäß Patentanspruch 1 sowie durch ein optisches Übertragungssystem gemäß Patentanspruch 6 gelöst.

Der wesentliche Vorteil des erfindungsgemäßen Verfahrens ist darin zu sehen, daß zur Übertragung von mindestens einem ersten und zweiten Datensignal im Polarisationsmultiplex in einem optischen Übertragungssystem in einem ersten Schritt sendeseitig durch Modulation eines ersten Trägersignals mit dem ersten Datensignal ein erstes moduliertes Signal und durch Modulation eines zweiten, sich von dem ersten Trägersignal um eine Differenzfrequenz unterscheidenden Trägersignals mit dem zweiten Datensignal ein zweites moduliertes Signal erzeugt wird. In einem zweiten Schritt werden das erste und zweite modulierte Signal zueinander orthogonal polarisiert sowie zu einem optischen Multiplexsignal zusammengefasst und übertragen. In einem dritten Schritt wird empfangsseitig das optische Multiplexsignal über ein Polarisationsstellglied an einen Polarisationssplitter geführt, der das optische Multiplexsignal in das erste und zweite modulierte Signal auftrennt. In einem vierten Schritt werden das erste modulierte Signal in ein erstes elektrisches Signal und das zweite modulierte Signal in ein zweites elektrischen Signal umgesetzt und in einem fünften Schritt wird der spektrale Anteil des ersten und/oder des zweiten elektrischen Signals bei der Differenzfrequenz ermittelt sowie davon mindestens ein Regelsignal zur Regelung des Polarisationsstellgliedes abgeleitet. Durch das erfindungsgemäße Verfahren wird besonders vorteilhaft zur exakten empfangsseitigen Trennung eines ersten und zweiten, im Polarisationsmultiplex übertragenen modulierten Signals zumindest ein empfangsseitig angeordnetes Polarisationsstellglied geregelt. Hierzu wird die quadrierende Eigenschaft eines opto-elektrischen Wandlers, beispielsweise einer Photodiode, ausgenutzt. Aufgrund dieser quadrierenden Eigenschaften entstehen im elektrischen Spektrum des am Ausgang des opto-elektrischen Wandlers abgegeben elektrischen Signals bei der Differenzfrequenz unerwünschte spektrale Anteile, sofern die mit Hilfe des Polarisationssplitters durchgeführte Trennung der beiden im Polarisationsmultiplex übertragenen modulierten Signale nicht exakt ist. Diese bei der Differenzfrequenz liegenden spektralen Anteile entstehen sowohl im ersten als auch im zweiten elektrischen Signal. Die Amplitude dieser spektralen Anteile wird erfindungsgemäß zur Bildung zumindest eines Regelsignals für die Steuerung des Polarisationsstellgliedes ausgewertet. Hierbei wird das Polarisationsstellglied beispielsweise mit Hilfe des mindestens einen Regelsignals derart gesteuert, daß der bei der Differenzfrequenz entstehende spektrale Anteil minimal wird. Mit Hilfe eines derartigen scharfen Regelkriteriums wird eine möglichst exakte empfangsseitige Trennung der beiden im Polarisationsmultiplex übertragenen modulierten Signale möglich.

Vorteilhaft wird das erste oder zweite modulierte Signal sendeseitig verzögert, wodurch eine effektive Dekorrelation des ersten und zweiten modulierten Signals erreicht wird. Hierdurch wird die Schärfe des Regelkriteriums zusätzlich erhöht.

Ein weiterer Vorteil der Erfindung ist darin zu sehen, daß zur Unterscheidung des ersten und zweiten elektrischen Signals sendeseitig dem ersten und/oder dem zweiten Trägersignal mindestens ein Pilottonsignal überlagert wird. Vorteilhaft wird dem ersten und/oder zweiten modulierten Signal ein Pilotton mit einer festgelegten Frequenz überlagert, anhand dessen nach der sendeseitigen Trennung des ersten und zweiten modulierten Signals mit Hilfe des Polarisationssplitters und der Umsetzung in ein erstes und zweites elektrisches Signal eine eindeutige Identifizierung des ersten und zweiten elektrischen Signal als solche möglich wird. Alternativ können zur Unterscheidung des ersten und zweiten elektrischen Signals das erste und das zweite Datensignal mit unterschiedlichen Übertragungsbitraten übertragen werden. In der alternativen Ausführungsform wird das jeweilige elektrische Signal vorteilhaft anhand seiner aktuellen Übertragungsbitrate identifiziert.

Zusätzliche vorteilhafte Ausgestaltungen des erfindungsgemäßen Verfahrens, insbesondere ein optisches Übertragungssystem zur Übertragung von mindestens einem ersten und zweiten Datensignal im Polarisationsmultiplex sind den weiteren Ansprüchen zu entnehmen.

Ausführungsbeispiele des erfindungsgemäßen Verfahrens sowie des erfindungsgemäßen optischen Übertragungssystem sind im folgenden anhand eines Prinzipschaltbildes und mehreren Diagrammen näher erläutert.
- Figur 1: zeigt beispielhaft ein optisches Übertragungssystem zur Übertragung mindestens eines ersten und zweiten Datensignals im Polarisationsmultiplex,
- Figur 2: zeigt beispielhaft das optische Multiplexsignal, und
- Figur 3: zeigt den Amplitudenverlauf des ermittelten spektralen Anteils bei der Differenzfrequenz in Abhängigkeit des Polarisationswinkels.

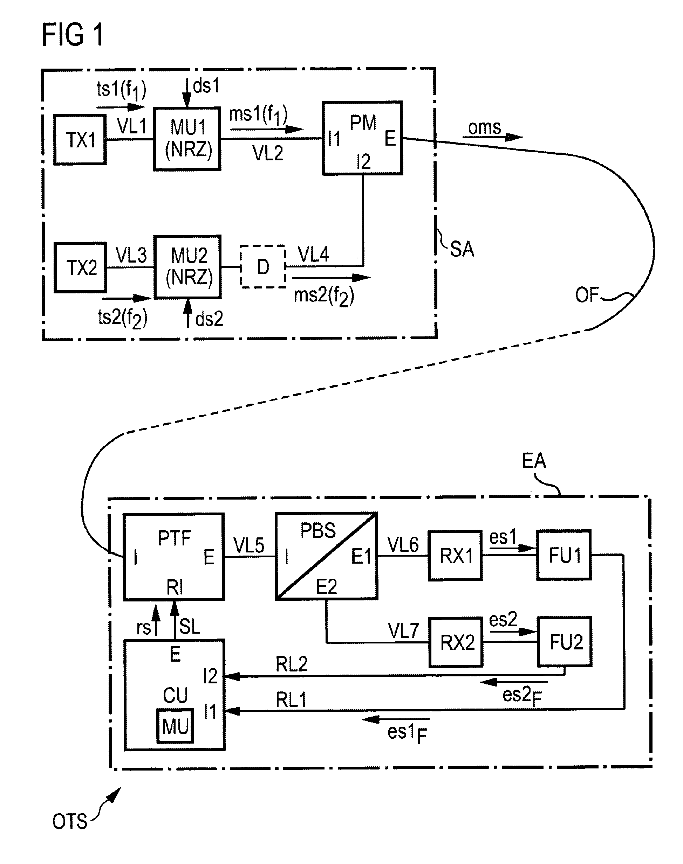

In Figur 1 ist beispielhaft ein optisches Übertragungssystem OTS schematisch dargestellt, das eine Sendeanordnung SA sowie eine über eine optische Übertragungsstrecke OF angeschlossene Empfangsanordnung EA aufweist. In der Sendeanordnung SA sind beispielhaft eine erste und zweite Signalerzeugungseinheit TX1, TX2, eine erste und zweite Modulatoreneinheit MU1, MU2, ein Verzögerungselement D, sowie ein Polarisationsmultiplexer PM vorgesehen. Die Empfangsanordnung EA umfaßt ein Polarisationsstellglied PTF, einen Polarisationssplitter PBS, einen ersten und zweiten opto-elektrischen Wandler RX1, RX2, eine erste und zweite Filtereinheit FU1, FU2 und eine Regeleinheit CU.

Die erste Signalerzeugungseinheit TX1 der Sendeanordnung SA ist über eine erste Verbindungsleitung VL1 an die erste Modulatoreneinheit MU1 angeschlossen, die über eine zweite Verbindungsleitung VL2 mit dem ersten Eingang I1 des Polarisationsmultiplexers PM verbunden ist. Die zweite Signalerzeugungseinheit TX2 ist über eine dritte Verbindungsleitung VL3 mit der zweiten Modulatoreneinheit MU2 verbunden, die über ein Verzögerungselement D durch eine vierte Verbindungsleitung VL4 an den zweiten Eingang E2 des Polarisationsmultiplexers PM angeschlossen ist. Das Verzögerungselement D ist nur optional vorgesehen, was in Figur 1 durch eine strichliert gezeichneten Linie dargestellt ist.

An den Ausgang E des Polarisationsmultiplexers PM ist der Eingang der optischen Übertragungsstrecke OF angeschlossen, deren Ausgang an den Eingang I des Polarisationsstellgliedes PTF der Empfangsanordnung EA geführt ist. Hierbei kann die optische Übertragungsstrecke OF aus mehreren, nicht in Figur 1 dargestellten optischen Übertragungsstreckenabschnitten bestehen (in Figur 1 durch eine strichlierte Linie angedeutet).

Der Ausgang E des Polarisationsstellgliedes PTF ist über eine fünfte Verbindungsleitung VL5 an den Eingang I des Polarisationssplitters PBS angeschlossen, dessen erster Ausgang E1 über eine sechste Verbindungsleitung VL6 an den Eingang des ersten opto-elektrischen Wandlers RX1 und dessen zweiter Ausgang E2 über eine siebte Verbindungsleitung VL7 an den Eingang des zweiten opto-elektrischen Wandlers RX2 geführt ist. Die Ausgänge des ersten bzw. zweiten opto-elektrischen Wandlers RX1, RX2 sind an die Eingänge der ersten bzw. zweiten Filtereinheit FU1, FU2 geführt. Die erste Filtereinheit FU1, sowie die zweite Filtereinheit FU2 sind beispielsweise über eine erste bzw. eine zweite Regelleitung RL1, RL2 mit dem ersten bzw. zweiten Eingang I1, I2 der Regeleinheit CU verbunden, deren Ausgang E über eine Steuerleitung SL an den Regeleingang RI des Polarisationsstellgliedes PTF angeschlossen ist. Außerdem weist die Regeleinheit CU beispielsweise eine Meßeinheit MU auf.

In der ersten Signalerzeugungseinheit TX1 wird ein erstes Trägersignal ts1 mit einer ersten Frequenz f₁ erzeugt, das von der ersten Signalerzeugungseinheit TX1 über die erste Verbindungsleitung VL1 an die erste Modulatoreneinheit MU1 geführt wird. Zusätzlich wird an die erste Modulatoreneinheit MU1 ein erstes Datensignal ds1 geführt, mit dem das erste Trägersignal ts1(f₁) moduliert wird und hierdurch ein erstes moduliertes Signal ms(f₁) erzeugt wird, das über die zweite Verbindungsleitung VL2 an den ersten Eingang I1 des Polarisationsmultiplexers PM gesteuert wird.

In der zweiten Signalerzeugungseinheit TX2 wird ein zweites Trägersignal ts2 mit einer zweiten Frequenz f₂ erzeugt, wobei sich die erste Frequenz f1 des ersten Trägersignal ts1(f₁) um eine Differenzfrequenz Δf von der zweiten Frequenz f₂ des zweiten Trägersignals ts2(f₂) unterscheidet. Als Differenzfrequenz Δf wird ein Wert größer als ein Gigahertz gewählt (im betrachteten Ausführungsbeispiels ist Δf = 5 GHz). Somit weist das zweite Trägersignal ts2(f₂) im Vergleich zum ersten Trägersignal ts1(f₁) eine um den Differenzfrequenzbetrag Δf erhöhte zweite Frequenz f₂ auf. Das zweite Trägersignal ts2(f₂) wird über die dritte Verbindungsleitung VL3 der zweiten Modulatoreneinheit MU2 zugeführt. Der zweiten Modulatoreneinheit MU2 wird ebenfalls ein zweites Datensignal ds2 zur Weiterverarbeitung zugeführt.

In der zweiten Modulatoreneinheit MU2 wird das zweite Trägersignal ts2(f₂) mit dem zweiten Datensignal ds2 moduliert und hierdurch ein zweites moduliertes Signal ms2(f₂) erzeugt, das über das Verzögerungselement D, sowie die vierte Verbindungsleitung VL4 an den zweiten Eingang I2 des Polarisationsmultiplexers PM gesteuert wird. Hierbei wird das am Ausgang der zweiten Modulatoreneinheit MU2 abgegebene zweite modulierte Signal ms2(f₂) mit Hilfe des Verzögerungselementes D verzögert, wodurch das erste und zweite modulierte Signal ms1(f₁), ms2(f₂) sendeseitig dekorreliert werden können.

Bei der Erzeugung des ersten und zweiten modulierten Signals ms1 (f₁), ms2 (f₂) wird die Polarisation derart voreingestellt, daß sie zueinander orthogonal polarisiert sind und somit im Polarisationsmultiplex über die optische Übertragungsstrecke OF zur Empfangsanordnung EA übertragen werden können. Zur Orthogonalisierung der Polarisation des ersten und zweiten modulierten Signals ms1(f₁), ms2(f₂) können beispielsweise empfangsseitig Polarisationsstellglieder vorgesehen sein (nicht in Figur 1 dargestellt). Dies ist jedoch nicht zwingend erforderlich, zumal mit Hilfe von modernen Signalerzeugungseinheiten TX1, TX2 bereits optische Signale mit einer vorgegebenen Polarisation erzeugt werden können.

Das erste und zweite modulierte Signal ms1 (f₁), ms2 (f₂) werden mit Hilfe des Polarisationsmultiplexers PM zu einem optischen Multiplexsignal oms zusammengefasst, das am Ausgang E des Polarisationsmultiplexers PM auf die optische Übertragungsstrecke OF gegeben wird. Somit werden das erste und zweite modulierte Signal ms1(f₁), ms2(f₂) in Form des optischen Multiplexsignals oms im Polarisationsmultiplex über die optische Übertragungsstrecke OF übertragen.

In der Empfangsanordnung EA wird das optische Multiplexsignal oms an den Eingang I des Polarisationsstellgliedes PTF geführt, mit dessen Hilfe die Polarisation des übertragenen ersten und/oder zweiten modulierten Signals ms1(f₁), ms2 (f₂) innerhalb des optischen Multiplexsignals oms geregelt werden kann. Nach der Einstellung der Polarisation des übertragenen ersten und/oder zweiten modulierten Signals ms1(f₁), ms2(f₂) innerhalb des optischen Multiplexsignales oms wird das optische Multiplexsignal oms über die fünfte Verbindungsleitung VL5 an den Eingang I des Polarisationssplitters PBS geführt, der das optische Multiplexsignal oms in das erste modulierte und das zweite modulierte Signal ms1(f₁), ms2(f₂) aufspaltet.

Die Genauigkeit der Aufspaltung des optischen Multiplexsignal oms in das erste modulierte und das zweite modulierte Signal ms1(f₁), ms2(f₂) ist abhängig von der Orthogonalität der Polarisation des erste modulierten und das zweiten modulierten Signals ms1(f₁), ms2(f₂).

Das erste modulierte Signal ms1(f₁) wird am ersten Ausgang E1 des Polarisationssplitters PSB abgegeben und über die sechste Verbindungsleitung VL6 an ersten opto-elektrischen Wandler RX1 geführt. Analog hierzu wird am zweiten Ausgang E2 des Polarisationssplitters PBS das zweite modulierte Signal ms2(f₂) abgegeben und über die siebte Verbindungsleitung VL7 an den zweiten opto-elektrischen Wandler RX2 übertragen.

Das rückgewonnene erste und zweite modulierte Signal ms1(f₁), ms2(f₂) werden durch den ersten bzw. zweiten opto-elektrischen Wandler RX1, RX2 in ein erstes bzw. zweites elektrisches Signal es1,es2 umgesetzt, das an die erste bzw. zweite Filtereinheit FU1, FU2 geführt wird. Aufgrund der quadrierenden Eigenschaften des ersten und zweiten opto-elektrischen Wandlers RX1,RX2 wird bei der Differenzfrequenz Δf ein spektraler Anteil erzeugt. Mit Hilfe der ersten und zweiten Filtereinheit FU1,FU2 wird dieser spektrale Anteil des ersten und des zweiten elektrischen Signals es1, es2 bei der Differenzfrequenz Δf ermittelt und das gefilterte erste und zweite elektrische Signal es1_{F},es2_{F} über die erste und zweite Regelleitung RL1, RL2 an die Regeleinheit CU übertragen. Die erste und zweite Filtereinheit FU1, FU2 sind hierzu beispielsweise als Bandpaßfilter mit einer der Differenzfrequenz Δf entsprechenden Mittenfrequenz f_{M} ( im betrachteten Ausführungsbeispiel beispielsweise f_{M} = 5GHz) und einer Bandbreite von beispielsweise 1 GHz um die Differenzfrequenz Δf ausgestaltet.

In der Regeleinheit CU wird mit Hilfe des Meßeinheit MU die Amplitude des gefilterten ersten und/oder des zweiten elektrischen Signals es1_{F},es2_{F} bestimmt und hieraus mindestens ein Regelsignal rs zur Regelung des Polarisationsstellgliedes PTF abgeleitet, das über die Steuerleitung SL an den Regeleingang RI des Polarisationsstellgliedes PTF geführt wird. Zur Bildung des Regelsignals rs kann beispielsweise die Spannungsamplitude oder die Stromamplitude oder die Leistungsamplitude des gefilterten ersten und/oder des zweiten elektrischen Signals es1_{F},es2_{F} gemessen und ausgewertet werden. Hierbei wird durch das über das Regelsignals rs gesteuerte Polarisationsstellglied PTF die Polarisation des optischen Multiplexsignales oms derart verändert, dass die durch die Meßeinheit MU der Regeleinheit CU ermittelte Amplitude des gefilterten ersten und/oder des zweiten elektrischen Signals es1_{F},es2_{F} minimal wird und somit auch der spektrale Anteil des ersten und/oder zweiten elektrischen Signals es1,es2 empfangsseitig ein Minimum annimmt. Dies bedeutet, dass die Empfangsanordnung EA bestehend aus dem Polarisationsstellgliedes PTF und dem Polarisationssplitters PBS zur Trennung des ersten modulierten Signals ms1(f₁) und des zweiten modulierten Signals ms2(f₂) optimal eingestellt ist und somit die aufgrund der quadrierenden Eigenschaften des ersten und zweiten opto-elektrischen Wandlers RX1, RX2 bei der Differenzfrequenz Δf entstehenden spektralen Anteile des ersten und zweiten elektrischen Signals es1, es2 ein Minimum aufweisen bzw. nicht mehr meßbar sind. Durch die in Figur 1 dargestellte Anordnung wird somit eine exakte empfangsseitige Trennung des zueinander orthogonal polarisiert übertragenen ersten und zweiten modulierten Signals ms1(f₁), ms2(f₂) möglich.

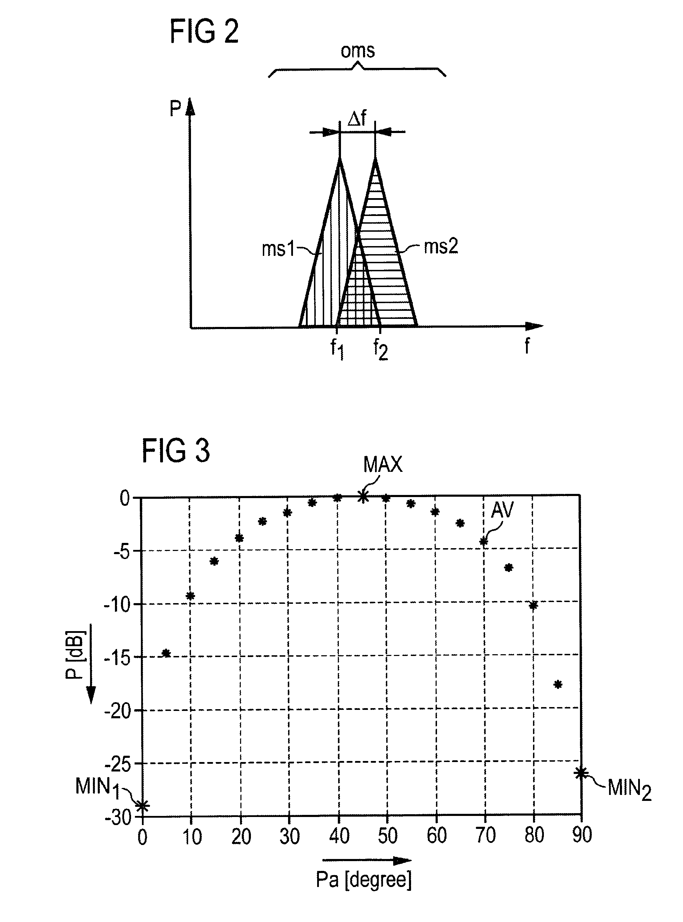

In Figur 2 ist beispielhaft in einem Diagramm die Leistungsverteilung des ersten und zweiten modulierten Signals ms1 (f₁), ms2 (f₂) innerhalb des optischen Multiplexsignals oms über der Frequenz f aufgetragen. An der Abszisse des Diagramms ist die Frequenz f und an der Ordinate des Diagramms die Leistung P angetragen. Aus Figur 2 wird die Differenzfrequenz Δf zwischen der ersten Frequenz f₁ des ersten modulierten Signals ms1(f₁) und der zweiten Frequenz f2 des zweiten modulierten Signals ms2(f₂) deutlich. Die in Figur 2 dargestellte Leistungsverteilung entspricht somit dem vom Polarisationsmultiplexer PM am Ausgang E auf die optische Übertragungsstrecke OF abgegebenen optischen Multiplexsignals oms.

In Figur 3 ist die Amplitudenverlauf AV in logarithmischen Maßstab [dB] des ermittelten spektralen Anteils, beispielsweise der Leistungsamplitude des gefilterten ersten und/oder elektrischen Signals es1_{F}, es2_{F}, bei der Differenzfrequenz Δf in Abhängigkeit des Polarisationswinkels pa in einem Diagramm dargestellt. An der Abszisse des Diagramms ist der Polarisationswinkel pa und an der Ordinate die Amplitude P angetragen. Der Amplitudenverlauf AV weist ein Maximum MAX bei einem Polarisationswinkel von pa = 45° auf, d.h. bei einer Polarisationsverschiebung zwischen dem ersten und zweiten elektrischen Signal es1, es2 von 45° weist die bei der Differenzfrequenz Δf aufgrund der quadrierenden Eigenschaft des ersten und/oder zweiten opto-elektrischen Wandlers RX1, RX2 hervorgerufene spektrale Anteil ein Maximum MAX auf. Dieses Maximum MAX des spektralen Anteils bei der Differenzfrequenz Δf nimmt sowohl mit zunehmender als auch mit abnehmender Polarisationsverschiebung zwischen dem ersten und zweiten elektrischen Signal es1,es2 ab und erreicht ein ersten Minimum MIN₁ bei 0° sowie ein zweites Minimum MIN₂ bei 90°. In dem ersten und zweiten Minimum MIN₁, MIN₂ sind das innerhalb des optischen Modulationssignals oms übertragene erste und zweite modulierte Signal ms1,ms2 ideal orthogonal polarisiert und können somit nahezu perfekt mit Hilfe des Polarisationssplitters PBS getrennt werden. Hierbei ist bei Auftreten des ersten Minimums MIN₁ bei einem Polarisationswinkel von pa = 0° das modulierte Signal der einen Polarisation, beispielsweise das erste modulierte Signal ms1, und bei Auftreten des zweiten Minimums MIN₂ bei einem Polarisationswinkel von pa = 90° das modulierte Signal der anderen Polarisation, beispielsweise das zweite modulierte Signal ms2, perfekt erfaßt. Alle anderen Polarisationswinkel pa sind bei der Regelung unerwünscht und führen bei der Trennung des ersten und zweiten modulierten Signals ms1,ms2 zu Übersprechen.

Durch die mit Hilfe des in der Sendeanordnung SA optional vorgesehenen Verzögerungselements D durchgeführte Verzögerung beispielsweise des zweiten modulierten Signals ms2 wird das in Figur 3 dargestellte Regelkriterium noch kontrastreicher, wodurch ein noch schärferes Regelsignal rs in der Regeleinheit CU gebildet werden kann. Hierzu können wahlweise das erste oder das zweite modulierte Signal ms1,ms2 mit Hilfe eines Verzögerungselements D verzögert werden.

Zusätzlich können sowohl das erste und das zweite gefilterte elektrische Signal es1_{F},es2_{F} zur Bildung zumindest eines Regelsignals rs ausgewertet werden.

Darüber hinaus ist eine zusätzliche Filterung des ersten und zweiten elektrischen Signals es1, es2 bei weiteren Frequenzen neben der Differenzfrequenz Δf mit Hilfe der ersten und zweiten Filtereinheit FU1, FU2 oder weiterer Filtereinheiten möglich, um hierdurch weitere Informationen über die Polarisation des ersten und zweiten elektrischen Signals es1,es2 zu erhalten. Diese weiteren Informationen können anschließend zur Erhöhung des Kontrastes des mindestens einen Regelsignals rs weiterverarbeitet werden.

Zur empfangsseitigen Unterscheidung des mit Hilfe des Polarisationssplitters PBS getrennten ersten und zweiten elektrischen Signals es1,es2 können das erste und das zweite Datensignal ds1,ds2 mit unterschiedlichen Übertragungsbitraten übertragen werden oder alternativ kann sendeseitig dem ersten und/oder dem zweiten Trägersignal ts1,ts2 oder dem ersten und zweiten modulierten Signal ms1,ms2 mindestens ein Pilottonsignal überlagert werden. Hierbei wird entweder durch die empfangsseitige Bestimmung der Übertragungsbitrate des jeweiligen elektrischen Signals es1,es2 oder durch die empfangsseitige Identifizierung des Pilottonsignals das erste und zweite elektrische Signal es1,es2 als solches identifiziert und kann anschließend signalspezifisch weiterverarbeitet werden.

## Patentansprüche

1. Verfahren zur Übertragung von mindestens einem ersten und zweiten Datensignal (ds1,ds2) im Polarisationsmultiplex in einem optischen Übertragungssystem (OTS),
- bei dem in einem ersten Schritt sendeseitig durch Modulation eines ersten Trägersignals (ts1) mit dem ersten Datensignal (ds1) ein erstes moduliertes Signal (ms1) und durch Modulation eines zweiten, sich von dem ersten Trägersignal (ts1) um eine Differenzfrequenz (Δf) unterscheidenden Trägersignal (ts2) mit dem zweiten Datensignal (ds2) ein zweites moduliertes Signal (ms2) erzeugt wird,
- bei dem in einem zweiten Schritt das erste und zweite modulierte Signal (ms1,ms2) zueinander orthogonal polarisiert sowie zu einem optischen Multiplexsignal (oms) zusammengefasst und übertragen werden,
- bei dem in einem dritten Schritt empfangsseitig das optische Multiplexsignal (oms) über ein Polarisationsstellglied (PTF) an einen Polarisationssplitter (PBS) geführt wird, der das optische Multiplexsignal (oms) in das erste und zweite modulierte Signal (ms1,ms2) auftrennt,
- bei dem in einem vierten Schritt das erste modulierte Signal (ms1) in ein erstes elektrisches Signal (es1) und das zweite modulierte Signal (ms2) in ein zweites elektrischen Signal (es2) umgesetzt werden,
**dadurch gekennzeichnet,**
**dass** in einem fünften Schritt der spektrale Anteil des ersten und/oder des zweiten elektrischen Signals (es1,es2) bei der Differenzfrequenz (Δf) ermittelt wird und davon mindestens ein Regelsignal (rs) zur Regelung des Polarisationsstellgliedes (PTF) abgeleitet wird, wobei die Differenzfrequenz (Δf) größer als ein Gigahertz gewählt wird und das Polarisationsstellglied (PTF) mittels des abgeleiteten Regelsignals (rs) derart geregelt wird, dass der bei der Differenzfrequenz (Δf) entstehende spektrale Anteil minimal wird.

2. Verfahren nach Anspruch 1,
**dadurch gekennzeichnet,**
**dass** die Amplitude (P) des ersten und/oder des zweiten elektrischen Signals (es1,es2) bei der Differenzfrequenz (Δf) auf ein Minimum (MIN₁,MIN₂) geregelt wird.

3. Verfahren nach Anspruch 1 oder 2,
**dadurch gekennzeichnet,**
**dass** das erste oder zweite modulierte Signal (ms1, ms2) sendeseitig zur Dekorrelation verzögert wird.

4. Verfahren nach einem der Ansprüche 1 bis 3,
**dadurch gekennzeichnet,**
**dass** zur Unterscheidung des ersten und zweiten elektrischen Signals (es1,es2) sendeseitig dem ersten und/oder dem zweiten Trägersignal (ts1,ts2) oder modulierten Signal (ms1, ms2) mindestens ein Pilottonsignal überlagert wird.

5. Verfahren nach einem der Ansprüche 1 bis 4,
**dadurch gekennzeichnet,**
**dass** zur Unterscheidung des ersten und zweiten elektrischen Signals (es1,es2) das erste und das zweite Datensignal (ds1, ds2) mit unterschiedlichen Übertragungsbitraten übertragen werden.

6. Optisches Übertragungssystem (OTS) zur Übertragung von mindestens einem ersten und zweiten Datensignal (ds1,ds2) im Polarisationsmultiplex mit einer Sendeanordnung (SA) und einer Empfangsanordnung (EA), die über mindestens einen optischen Faserstreckenabschnitt (OF) verbunden sind,
- bei dem die Sendeanordnung (SA) mindestens eine Signalerzeugungseinheit (TX1,TX2) zur Erzeugung eines ersten und zweiten, sich um eine Differenzfrequenz (Δf) unterscheidenden Trägersignals (ts1,ts2) aufweist, der mindestens eine Modulatoreneinheit (MU1, MU2) zur Erzeugung eines ersten modulierten Signals (ms1) durch die Modulation des ersten Trägersignals (ts1) mit dem ersten Datensignal (ds1) und zur Erzeugung eines zweiten modulierten Signals (ms2) durch Modulation des zweiten Trägersignals (ts2) mit dem zweiten Datensignal (ds2) nachgeschaltet ist, wobei das erste und zweite modulierte Signal (ms1, ms2) zueinander orthogonal polarisiert sind,
- bei dem in der Sendeanordnung (SA) der mindestens einen Modulatoreneinheit (MU1,MU2) ein Polarisationsmultiplexer (PM) zum Zusammenfassen des ersten und zweiten modulierten, zueinander orthogonal polarisierten Signals (ms1,ms2) zu einem optischen Multiplexsignal (oms) nachgeschaltet ist,
- bei dem in der Empfangsanordnung (EA) mindestens ein Polarisationsstellglied (PTF) zur Einstellung der Orthogonalität der Polarisation des ersten und zweiten modulierten Signals (ms1,ms2) und ein diesem nachgeschalteter, einen ersten und zweiten Ausgang (E1,E2) aufweisender Polarisationssplitter (PBS) zur Aufspaltung des optischen Multiplexsignals (oms) in das erste und zweite modulierte Signal (ms1,ms2) vorgesehen sind, an dessen ersten Ausgang (E1) ein erster opto-elektrischer Wandler (RX1) zur Umsetzung des ersten modulierten Signals (ms1) in ein erstes elektrisches Signal (es1) und an dessen zweiten Ausgang (E2) ein zweiter opto-elektrischer Wandler (RX2) zur Umsetzung des zweiten modulierten Signals (ms2) in ein zweites elektrisches Signal (es2) angeschlossen sind,
**dadurch gekennzeichnet,**
**dass** an den ersten und/oder den zweiten opto-elektrischen Wandler (RX1,RX2) eine Filtereinheit (FU1,FU2) zur Ermittlung des spektralen Anteils des ersten und/oder des zweiten elektrischen Signals (es1,es2) bei der Differenzfrequenz (Δf) vorgesehen ist, an die eine Regeleinheit (CU) zur Bildung mindestens eines Regelsignals (rs) aus dem gefilterten spektralen Anteil (es1_{F},es2_{F}) zur Regelung des Polarisationsstellgliedes (PTF) angeschlossen ist, wobei die Differenzfrequenz (Δf) größer als ein Gigahertz gewählt wird und das Polarisationsstellglied (PTF) mittels des abgeleiteten Regelsignals (rs) derart geregelt wird, dass der bei der Differenzfrequenz (Δf) entstehende spektrale Anteil minimal wird.

7. Optisches Übertragungssystem nach Anspruch 6,
**dadurch gekennzeichnet,**
**dass** zur Bildung des mindestens einen Regelsignals (rs) in der Regeleinheit (CU) eine Messeinheit (MU) zur Ermittlung der Amplitude des gefilterten spektralen Anteils des ersten und/oder des zweiten elektrischen Signals (es1_{F},es2_{F}) vorgesehen ist.

8. Optisches Übertragungssystem nach Anspruch 6 oder 7,
**dadurch gekennzeichnet,**
**dass** die Filtereinheit (FU1,FU2) als Bandpassfilter mit einer der Differenzfrequenz (Δf) entsprechenden Mittenfrequenz (f_{M}) ausgestaltet ist.

9. Optisches Übertragungssystem nach einem der Ansprüche 6 bis 8,
**dadurch gekennzeichnet,**
**dass** weitere Filtereinheiten (FU1,FU2) an den ersten und/oder den zweiten opto-elektrischen Wandler (RX1,RX2) zur Ermittlung von weiteren spektralen Anteilen des ersten und/oder des zweiten elektrischen Signals (es1,es2) bei unterschiedlichen Frequenzen (f) vorgesehen sind, die zusätzlich zur Bildung des mindestens eines Regelsignals (rs) in der Regeleinheit (CU) ausgewertet werden.

## Claims

1. Method for transmitting at least one first and one second data signal (ds1, ds2) in polarization division multiplex in an optical transmission system (OTS),
- in which, in a first step, a first modulated signal (ms1) is generated at the transmitting end by modulating a first carrier signal (ts1) with the first data signal (ds1) and a second modulated signal (ms2) is generated by modulating a second carrier signal (ts2), which differs from the first carrier signal (ts1) by a differential frequency (Δf), with the second data signal (ds2),
- in which, in a second step, the first and second modulated signal (ms1, ms2) are polarized orthogonally with respect to one another and combined to form an optical multiplex signal (oms) and are transmitted,
- in which, in a third step, at the receiving end, the optical multiplex signal (oms) is conducted via a polarization control element (PTF) to a polarization splitter (PBS) which splits the optical multiplex signal (oms) into the first and second modulated signal (ms1, ms2),
in which, in a fourth step, the first modulated signal (ms1) is converted into a first electrical signal (es1) and the second modulated signal (ms2) is converted into a second electrical signal (es2),
**characterized**
**in that**, in a fifth step, the spectral component of the first and/or of the second electrical signal (es1, es2) at the differential frequency (Δf) is determined and from this at least one control signal (rs) is derived for controlling the polarization control element (PTF), in which the differential frequency (Δf) selected is greater than one gigahertz and the polarization control element (PTF) is controlled by the derived control signal (rs) in such a way that the spectral component generated at the differential frequency (Δf) is minimized.

2. Method according to claim 1, **characterized in that** the amplitude (P) of the first and/or of the second electrical signal (es1, es2) at the differential frequency (Δf) is controlled to a minimum (MIN₁, MIN₂).

3. Method according to claim 1 or 2, **characterized in that** the first or second modulated signal (ms1, ms2) is delayed at the transmitting end for the purpose of decorrelation.

4. Method according to one of claims 1 to 3, **characterized in that** in order to distinguish between the first and second electrical signal (es1, es2), at least one pilot tone signal is superimposed on the first and/or the second carrier signal (ts1, ts2) or modulated signal (ms1, ms2) at the transmitting end.

5. Method according to one of claims 1 to 4, **characterized in that** the first and the second data signal (ds1, ds2) are transmitted at different transmission bit rates for distinguishing between the first and second electrical signal (es1, es2).

6. Optical transmission system (OTS) for transmitting at least one first and one second data signal (ds1, ds2) in polarization division multiplex, comprising a transmitting arrangement (SA) and a receiving arrangement (EA) which are connected via at least one optical fibre link section (OF),
- in which the transmitting arrangement (SA) exhibits at least one signal generating unit (TX1, TX2) for generating a first and second carrier signal (ts1, ts2) differing by a differential frequency (Δf), which is followed by at least one modulator unit (MU1, MU2) for generating a first modulated signal (ms1) by modulating the first carrier signal (ts1) with the first data signal (ds1) and for generating a second modulated signal (ms2) by modulating the second carrier signal (ts2) with the second data signal (ds2), the first and second modulated signal (ms1, ms2) being polarized orthogonally with respect to one another,
- in which, in the transmitting arrangement (SA), the at least one modulator unit (MU1, MU2) is followed by a polarization multiplexer (PM) for combining the first and second modulated, mutually orthogonally polarized signal (ms1, ms2) to form an optical multiplex signal (oms),
- in which, in the receiving arrangement (EA), at least one polarization control element (PTF) for adjusting the orthogonality of the polarization of the first and second modulated signal (ms1, ms2), followed by a polarization splitter (PBS), exhibiting a first and second output (E1, E2), for splitting the optical multiplex signal (oms) into the first and second modulated signal (ms1, ms2) are provided, at the first output (E1) of which a first optoelectrical transducer (RX1) for converting the first modulated signal (ms1) into a first electrical signal (es1) is connected and at the second output (E2) of which a second optoelectrical transducer (RX2) for converting the second modulated signal (ms2) into a second electrical signal (es2) is connected,
**characterized**
**in that** a filter unit (FU1, FU2) is provided at the first and/or the second optoelectrical transducer (RX1, RX2) for determining the spectral component of the first and/or the second electrical signal (es1, es2) at the differential frequency (Δf), to which is connected a control unit (CU) for forming at least one control signal (rs) from the filtered spectral component (es1_{F}, es2_{F}) for controlling the polarization control element (PTF), in which the differential frequency (Δf) selected is greater than one gigahertz and the polarization control element (PTF) is controlled by the derived control signal (rs) in such a way that the spectral component generated at the differential frequency (Δf) is minimized.

7. Optical transmission system according to claim 6, **characterized in that** for forming the at least one control signal (rs), a measuring unit (MU) for determining the amplitude of the filtered spectral component of the first and/or the second electrical signal (es1_{F}, es2_{F}) is provided in the control unit (CU).

8. Optical transmission system according to claim 6 or 7, **characterized in that** the filter unit (FU1, FU2) is designed as band-pass filter with a centre frequency (f_{M}) corresponding to the differential frequency (Δf).

9. Optical transmission system according to one of claims 6 to 8, **characterized in that** other filter units (FU1, FU2) are provided at the first and/or the second optoelectrical transducer (RX1, RX2) for determining further spectral components of the first and/or the second electrical signal (es1, es2) at different frequencies (f) which are additionally evaluated for forming the at least one control signal (rs) in the control unit (CU).

## Revendications

1. Procédé de transmission d'au moins un premier et un deuxième signal de données (ds1, ds2) en multiplexage par polarisation dans un système de transmission optique (OTS),
- dans lequel, dans une première étape, on crée dans l'émetteur un premier signal modulé (ms1) en modulant un premier signal porteur (ts1) par le premier signal de données (ds1) et on crée un deuxième signal modulé (ms2) en modulant par le deuxième signal de données (ds2) un deuxième signal porteur (ts2) qui diffère du premier signal porteur (ts1) d'un différentiel de fréquence (Δf),
- dans lequel, dans une deuxième étape, le premier et le deuxième signal modulé (ms1, ms2) sont polarisés orthogonalement l'un par rapport à l'autre, sont rassemblés en un signal optique multiplexé (oms) et sont transmis,
- dans lequel, dans une troisième étape qui se déroule dans le récepteur, le signal optique multiplexé (oms) est amené par l'intermédiaire d'un organe (PTF) de réglage de polarisation à un diviseur de polarisation (PBS) qui sépare le signal optique multiplexé (oms) en le premier et le deuxième signal modulé (ms1, ms2),
- dans lequel, au cours d'une quatrième étape, le premier signal modulé (ms1) est converti en un premier signal électrique (es1) et le deuxième signal modulé (ms2) est converti en un deuxième signal électrique (es2),
**caractérisé en ce que**
- dans une cinquième étape, la contribution spectrale du premier et/ou du deuxième signal électrique (es1, es2) pour le différentiel de fréquence (Δf) est déterminée, et de là, au moins un signal de réglage (rs) qui sert à régler l'organe (PTF) de réglage de polarisation est déduit, le différentiel de fréquence (Δf) sélectionné étant supérieur à un gigahertz et l'organe (PTF) de réglage de polarisation étant réglé au moyen du signal de réglage (rs) déduit, de manière à minimiser la contribution spectrale au différentiel de fréquence (Δf).

2. Procédé selon la revendication 1, **caractérisé en ce que** l'amplitude (P) du premier et/ou du deuxième signal électrique (es1, es2) est réglée à un minimum (MIN₁, MIN₂) pour le différentiel de fréquence (Δf).

3. Procédé selon les revendications 1 ou 2, **caractérisé en ce que** le premier ou le deuxième signal modulé (ms1, ms2) sont retardés du côté de l'émetteur pour être décorrélés.

4. Procédé selon l'une des revendications 1 à 3, **caractérisé en ce que** pour distinguer le premier et le deuxième signal électrique (es1, es2), au moins un signal de tonalité pilote est superposé dans l'émetteur au premier et/ou au deuxième signal porteur (ts1, ts2) ou au signal modulé (ms1, ms2).

5. Procédé selon l'une des revendications 1 à 4, **caractérisé en ce que** pour distinguer le premier et le deuxième signal électrique (es1, es2), le premier et le deuxième signal de données (ds1, ds2) sont transmis à différents taux de transfert de bit.

6. Système de transmission optique (OTS) destiné à transmettre au moins un premier et un deuxième signal de données (ds1, ds2) en multiplexage par polarisation, qui présente un système émetteur (SA) et un système récepteur (EA) qui sont reliés l'un à l'autre par au moins un tronçon (OF) de parcours à fibres optiques,
- dans lequel le système émetteur (SA) présente au moins une unité (TX1, TX2) de création de signaux qui crée un premier et un deuxième signal porteur (ts1, ts2) qui se distinguent par un différentiel de fréquence (Δf), et en aval de laquelle au moins une unité de modulation (MU1, MU2) qui crée un premier signal modulé (ms1) en modulant le premier signal porteur (ts1) par un premier signal de données (ds1) et qui crée un deuxième signal modulé (ms2) en modulant le deuxième signal porteur (ts2) par le deuxième signal de données (ds2), le premier et le deuxième signal modulé (ms1, ms2) étant polarisés orthogonalement l'un par rapport à l'autre,
- dans lequel, dans le système émetteur (SA) est raccordé en aval de l'au moins une unité de modulation (MU1, MU2) un multiplexeur de polarisation (PM) pour rassembler les premier et deuxième signaux (ms1, ms2) modulés et polarisés orthogonalement l'un par rapport à l'autre en un signal optique multiplexé (oms),
- dans lequel, dans le système récepteur (EA) est prévu au moins un organe (PTF) de réglage de polarisation pour régler l'orthogonalité de la polarisation du premier et du deuxième signal modulé (ms1, ms2), avec en aval de cet organe un diviseur de polarisation (PBS) qui présente une première et une deuxième sortie (E1, E2) et qui divise le signal optique multiplexé (oms) en le premier et le deuxième signal modulé (ms1, ms2), un premier convertisseur opto-électrique (RX1) qui convertit le premier signal modulé (ms1) en un premier signal électrique (es1) étant raccordé à sa première sortie (E1) et un deuxième convertisseur opto-électrique (RX2) qui convertit le deuxième signal modulé (ms2) en un deuxième signal électrique (es2) étant raccordé à sa deuxième sortie (E2),
**caractérisé en ce que**
sur le premier et/ou le deuxième convertisseur opto-électrique (RX1, RX2) est prévue une unité de filtre (FU1, FU2) qui détermine la contribution spectrale du premier et/ou du deuxième signal électrique (es1, es2) pour le différentiel de fréquence (Δf) et auquel une unité de réglage (CU) qui forme au moins un signal de réglage (rs) à partir de la contribution spectrale filtrée (es1_{F}, es2_{F}) pour régler l'organe (PTF) de réglage de polarisation est raccordé, le différentiel de fréquence (Δf) sélectionné étant supérieur à un gigahertz et l'organe de polarisation (PTF) étant réglé au moyen du signal de régulation (rs) ainsi déduit de telle sorte que la contribution spectrale obtenue au différentiel de fréquence (Δf) soit minimisée.

7. Système de transmission optique selon la revendication 6, **caractérisé en ce qu'**une unité de mesure (MU) qui détermine la valeur de la contribution spectrale filtrée du premier et/ou du deuxième signal électrique (es1_{F}, es2_{F}) est prévue pour former le ou les signaux de réglage (rs) dans l'unité de réglage (CU).

8. Système de transmission optique selon les revendications 6 ou 7, **caractérisé en ce que** l'unité de filtre (FU1, FU2) est configurée comme filtre passe-bande dont la fréquence centrale (f_{M}) correspond au différentiel de fréquence (Δf).

9. Système de transmission optique selon l'une des revendications 6 à 8, **caractérisé en ce que** d'autres unités de filtre (FU1, FU2) sont prévues sur le premier et/ou sur le deuxième convertisseur opto-électrique (RX1, RX2) pour déterminer d'autres contributions spectrales du premier et/ou du deuxième signal électrique (es1, es2) à différentes fréquences (f), la contribution spectrale étant en outre évaluée pour former le ou les signaux de réglage (rs) dans l'unité de réglage (CU).
